# EUROPEAN PATENT APPLICATION

(11) **EP 4 435 461 A1**
(43) Date of publication of application: **25.09.2024**
(21) Application number: 23163191.2
(22) Date of filing: 21.03.2023
(51) Int. Cl.: G01S 5/02

(54) **A COMPUTER-IMPLEMENTED METHOD FOR GENERATING A PREDICTOR FOR LOCALIZATION ERRORS OF DIFFERENT RADIO TECHNOLOGIES**

(71) Applicant: Siemens Aktiengesellschaft, 80333 München (DE)
(72) Inventor: Bröring, Arne, 81735 München (DE)
(74) Representative: Siemens Patent Attorneys

(57) **Abstract**

The invention refers to a computer-implemented method for generating a predictor (PR) for localization errors (ERi) of different radio technologies (RT1, RT2, ..., RTm), comprising the following steps for a respective radio technology (RT1, RT2, ..., RTm) of said different radio technologies (RT1, RT2, ..., RTm):
i) providing a plurality of positional measurements (PMi) acquired in a predetermined environment, where each positional measurement (PMi) comprises a raw signal (RSi) measured based on the respective radio technology (RT1, RT2, ..., RTm), a first position (POi) determined based on the raw signal (RSi) and a second position (PO') being a ground truth position for the respective positional measurement (PMi);
ii) training (TR) a data-driven model (NN1, ..., NNm) for the respective radio technology (RT1, RT2, ..., RTm), the data-driven model (NN1, ..., NNm) having an input (IN) for the raw signal (RSi) and/or the first position (POi) and an output (OU) for a positional error (ERi) derived from the input (IN), where the positional error (ERi) is the difference between the first position (POi) and the second position (PO'), the training (TR) being based on training data (TD) comprising for each positional measurement (PMi) the raw signal (RSi) and/or the first position (POi) and the positional error (ERi).

## Description

The invention refers to a computer-implemented method for generating a predictor for localization errors of different radio technologies.

Localization based on radio networks has many application fields. E.g., this localization may be used for routing automatic guided vehicles in large industrial plants or for tracking movable assets. Common radio technologies for localizing objects are inter alia UWB, WiFi, 5G and RFID.

Utilizing radio technologies, different methods can be applied to deduct the position from the received raw signals. E.g., fingerprinting based approaches rely on a database of previously determined signal samples, such as channel impulse responses or received signal strengths, and map the received raw signals against the database. In other approaches, time-of-flight information included in the received radio signals is used to deduct the position based on triangulation.

The signal quality of different radio technologies can be heterogeneously distributed over the area under observation. E.g., high precision UWB-based localization may only be needed in a few regions of an industrial plant and, hence, in those regions the UWB antennas need to be concentrated. Accordingly, the accuracy of UWB-based localization can vary drastically and may achieve less than 30 cm in regions with many UWB antennas, whereas a localization in other regions with no or less UWB antennas is not possible or has very high positional errors.

Several radio technologies may be provided in parallel for the localization of an object in a specific area. To do so, several radio networks based on different radio technologies are installed in the specific area and the object to be localized carries several tags, each tag providing a raw signal of another radio technology from which the position of the object can be derived.

In case that an object can be localized by various radio technologies, it is not necessarily known which radio technology provides the highest accuracy in different regions. Up to now, the decision which localization method is best in particular regions, is decided based on expert knowledge about the infrastructure in which the object moves. If multiple radio technologies are involved, they are typically run at the same time, which results in a high energy consumption and less battery life of the tags.

In geometric localization approaches (e.g. based on time-of-flight information), the person who is setting up the system can decide to take additional measurement samples in areas which are not covered densely by the corresponding radio network. Those additional signal measurements are usually taken manually, thus prolongating the time needed for localization.

In fingerprinting based approaches, the fingerprint database is built up by humans walking around or a robot vehicle circulating the corresponding area with a data collecting device. However, a feedback loop on where more data samples should be gathered to reduce positional errors does not exist.

It is an object of the invention to provide a precise predictor for localization errors of different radio technologies. Furthermore, it is an object of the invention to provide a localization method which chooses the radio technology based on an accurate prediction of its localization error.

This object is solved by the computer-implemented method for generating a predictor according to claim 1 and by a computer-implemented method for localization of an object according to claim 11. Preferred embodiments of the invention are defined in the dependent claims.

The computer-implemented method for generating a predictor for localization errors of different radio technologies comprises the following steps for a respective radio technology (i.e. each radio technology) of said different radio technologles.

In step i), a plurality of positional measurements acquired in a predetermined environment is provided. This step may comprise the acquisition of the positional measurements. However, the acquisition of the positional measurements may already be completed in step i). In this case, the provision of positional measurements refers to an access to a digital storage including the positional measurements. Each positional measurement comprises a raw signal measured based on the respective radio technology, a first position determined based on the raw signal and a second position being a ground truth position for the respective positional measurement.

In step ii), a data-driven model for the respective radio technology is trained, where the data-driven model has an input for the raw signal and/or the first position and an output for a positional error derived from the input. The positional error is the difference between the first position and the second position. The training is based on training data comprising for each positional measurement the raw signal and/or the first position and the positional error. In other words, the training is based on a supervised learning with a known output in the form of a positional error for input data in the form of the raw signal and/or the first position.

The method of the invention provides a very accurate predictor for positional errors by machine-learning, i.e., by training data-driven models. In a preferred embodiment, the data-driven model being trained for each radio technology comprises one or more neural networks, particularly one or more convolutional neural networks. However, other types of data-driven models may be used as well, e.g. K-nearest neighbors.

In a particularly preferred embodiment, the invention is used for indoor localization. I.e., the predetermined environment in which the plurality of positional measurements is or has been acquired refers to an indoor environment. In another preferred embodiment, the predetermined environment refers to an industrial plant which is an important application area for localization, e.g. for localizing robots or automated guided vehicles.

In a particularly preferred embodiment, the positional measurements provided in step i) are acquired or have been acquired by moving an object having a tag for measuring the raw signal of each radio technology to a plurality of different locations within the predetermined environment, where for each location the raw signal is measured by each tag and the first position for each radio technology is determined based on the raw signal measured by each tag, the second position being known or being determined for the respective location.

In a preferred variant of the above embodiment, the object being moved is an automated guided vehicle so that the data can be collected automatically. In another preferred variant of the above embodiment, the second position is determined by a LIDAR system carried by the object or an optical system carried by the object. Those systems enable a very accurate position determination so that the second position can be regarded as the ground truth position. The optical system for determining the second position may use optical markers with known positions distributed within the predetermined environment where the optical system, e.g. a camera, recognizes the corresponding markers and can thus associate the position of the object with the known position of the marker.

Various types of radio technologies may be processed in the method of the invention. Preferably, the different radio technologies comprise one or more of the following radio technologies:
- one or more short-range radio technologies, particularly UWB (UWB = Ultra Wide Band; IEEE standard family 802.15-4) and/or WiFi (IEEE standard family 802.11) and/or RFID (RFID = Radio Frequency Identification);
- one or more cellular radio technologies, particularly 5G and/or 6G.

In a further embodiment of the invention, an error map is determined for each radio technology, where a respective error map indicates for each second position the positional error for the respective radio technology. This error map provides useful information concerning the accuracy of the different radio technologies in different areas of the predetermined environment. In a preferred embodiment, the error map is visualized via a user interface giving a user feedback about the errors of different radio technologies within the predetermined environment.

In another preferred embodiment, the raw signals of one or more radio technologies of the plurality of radio technologies represent channel impulse response information or received signal strength information or time-of-flight information. Those types of information and the corresponding processes for determining positions are known for a skilled person.

In another preferred embodiment, each positional measurement for each radio technology further comprises the measurement time of the raw signal of the respective radio technology, where the measurement time is preferably part of the input of the data-driven model and part of the training data. Preferably, the measurement time specifies the time of day. This embodiment considers the fact that events influencing the positional error may repeat in regular intervals. Such events may refer to the occurrence of specific objects obstructing the line of sight path of radio signals within a radio network.

The invention also refers to a computer-implemented method for localization of an object in a preset environment, where the method has access to the predictor which is generated or has been generated by a method for generating a predictor according to the invention or one or more preferred embodiments thereof. The method for generating the predictor is based on a plurality of positioning measurements acquired in the predetermined environment as defined above, where this predetermined environment covers the preset environment in which the object is localized. The object has a tag for measuring the raw signal of each radio technology of the plurality of radio technologies and the method for localization of the object is capable to localize the object by determining its position based on the measured raw signal of the respective radio technology.

In the method for localization, a current radio technology of the plurality of radio technologies which is used for localizing the object is changed to another radio technology of the plurality of radio technologies in case that one or more conditions are present, the one or more conditions comprising the condition that the positional error of the current radio technology exceeds a threshold associated with the current radio technology.

The above described method tries to switch to radio technologies in case that the current radio technology is not very accurate. This method ensures a lower energy consumption because only one radio technology is used for localization at a time. I.e., only one tag for the corresponding radio technology is switched on during localization, where the other tags are switched off. In case of a change of the radio technology, the tag of the new radio technology is switched on whereas the tag of the former radio technology is switched off.

In a preferred embodiment of the above method for localization, the one or more conditions comprise the condition that the positional error of the other radio technology does not exceed a threshold associated with the other radio technology. In other words, a change of the radio technology is only performed in case that another radio technology has a lower positional error.

Besides the above methods, the invention refers to an apparatus for data processing, where the apparatus is configured to carry out a method for generating a predictor or a method for localization according to the invention or one or more preferred embodiments thereof.

Furthermore, the invention refers to a computer program product with program code, which is stored on a machine-readable carrier, for carrying out a method for generating a predictor or a method for localization according to the invention or one or more preferred embodiments thereof when the program code is executed on a computer.

Moreover, the invention refers to a computer program with program code for carrying out a method for generating a predictor or a method for localization according to the invention or one or more preferred embodiments thereof when the program code is executed on a computer.

In the following, an embodiment of the invention will be described in detail with respect to the accompanying drawings, wherein:
- Fig. 1: is a schematic diagram illustrating an embodiment of a method for generating a predictor according to the invention; and
- Fig. 2: is a schematic diagram illustrating an embodiment of a localization method according to the invention.

In the following, an embodiment of the invention will be described with respect to a spatial environment in the form of a manufacturing plant. Nevertheless, the invention may also be applied to other environments in which an object shall be localized. In the manufacturing plant, different radio technologies are installed in order to determine the locations of various objects, e.g. autonomously moving robots. The locations are used to track the movable objects within the plant. By doing so, autonomously moving objects can be routed in the plant.

Each radio technology of the radio technologies installed within the plant is based on a corresponding radio network having several anchors or access points which are combined transmitters and receivers of radio signals based on the corresponding radio technology. I.e., several radio networks being based on different radio technologies cover the premises of the manufacturing plant. The objects to be localized within the plant can be detected by each radio technology. To do so, the respective objects carry tags for the different radio technologies. Depending on the radio technology, a tag is a receiver or a combined sender and receiver which can detect a raw signal based on the corresponding radio technology. Based on the raw signal, the position of the tag and thus the position of the object carrying the tag can be derived.

Depending on the structure of the manufacturing plant and the distribution of corresponding anchors in the plant, the localization accuracy of the objects may vary between the installed radio technologies. Hence, there is a need that the localization error of the radio technology used for the localization of a corresponding object is monitored and, if necessary, switched in case that the positional accuracy of the currently used radio technology decreases and another radio technology provides a better positional accuracy. The invention as described in the following provides a predictor for the localization error of different radio technologies where the predictor is generated by training several data-driven models in the form of neural networks.

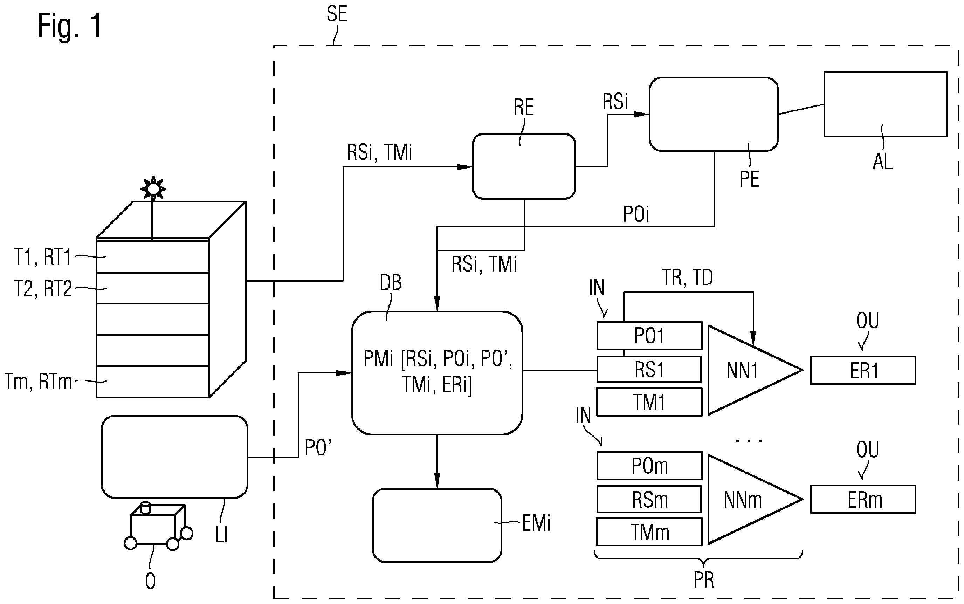

Fig. 1 shows the training of the predictor. For this training, an object O in the form of an automated guided vehicle is used. The object carries a plurality of tags T1, T2, ..., Tm. Each tag is based on a different radio technology. I.e., tag T1 is based on radio technology RT1, tag T2 on the radio technology RT2, ..., and tag Tm is based on the radio technology RTm. In the following, the index i is used in order to refer to any of those tags and radio technologies, i.e. i = 1, ..., m. Additionally to the tags, the object O has a LIDAR system LI which enables a very accurate localization of the object O.

Any known radio technology may be implemented in a respective tag. E.g., one tag may be based on UWB. In this case, a radio network in the form of several UWB anchors is installed within the plant. Another network may e.g. be based on WiFi. In this case, a radio network in the form of several WiFi access points is installed within the plant. Other radio technologies that may be implemented in the respective tags are RFID or cellular radio technologies, such as 5G. Each tag detects a raw signal RSi of the corresponding radio technology from which the position of the object O can be derived by a known localization method. E.g., the raw signal may be a channel impulse response information, a received signal strength information or a time-of-flight information.

In order to obtain training data for training the neural networks, the object O carrying the tags T1 to Tm moves to a plurality of locations within the plant. At each location, the raw signals RSi of the respective radio technologies are acquired by the corresponding tags. Additionally, the position PO' of the object O is measured by the LIDAR system LI. Because this position is very accurate, it is assumed to be the correct position and therefore considered as the ground truth position.

The object O interacts with a server SE indicated by a dotted rectangle. The server SE performs the training of respective neural networks NN1, ...., NNm for each radio technology in order to generate the predictor PR which represents the trained neural networks. To do so, the raw signal RSi of each tag T1, ..., Tm at each location of the object O is transmitted to a receiver RE of the server SE. Analogously, the ground truth position PO' measured by the LIDAR system LI at each location of the object O is transmitted to a database DB within the server SE. In the embodiment described herein, the measurement time TMi of the respective raw signals is also detected and transmitted to the receiver RE. Preferably, the time of day is acquired as measurement time TMi.

The received raw signals RSi are handed over to a positioning engine PE having implemented a corresponding positioning algorithm AL for deducing the position POi of the object O by known methods in dependence on corresponding raw signal RSi. The positions POi as well as the raw signals RSi and the measurement times TMi are stored in the database DB together with the ground truth position PO' at the corresponding location. Moreover, the positional error ERi being the difference between the position POi and the ground truth position PO' is stored in the database DB. As a consequence, the database DB includes positional measurements PMi for each radio technology and each location of the object O. Each positional measurement includes a raw signal RSi, the position POi derived from the raw signal, the ground truth position PO' determined by the LIDAR system LI, the measurement time TMi and the positional error ERi.

Based on the positional measurements PMi, the training of several neural networks NN1, ..., NNm, each for a respective radio technology RT1, RT2, ..., RTm, is performed within the server SE. The training is designated as TR in Fig. 1. Each neural network has an input IN comprising the position POi, the raw signal RSi as well as the measurement time TMi. The output OU of each neural network is the corresponding positional error ERi. The training of the neural networks is based on training data TD taken from the positional measurements PMi and comprising the positions POi, the raw signals RSi, the measurement times TMi and the errors ERi. Any known type of neural network can be used in combination with any known training method. In a preferred variant, the neural networks are convolutional neural networks. Furthermore, other data-driven models being based on machine learning may be used instead of neural networks.

After having performed the training/learning of the neural networks, the generation of the predictor PR is completed. Thereafter, the positional error of an object carrying the tags T1, ..., Tm can be determined for each radio technology by inputting the quantities POi, RSi and TMi to the respective neural network.

The embodiment as shown in Fig. 1 includes the optional step of determining an error map EMi for each radio technology RTi. This error map EMi indicates for each ground truth position PO' the positional error ERi. The error map may be visualized via a user interface and gives the user hints how to improve the localization of objects within the plant for corresponding radio technologies, e.g. by installing more anchors for the radio network of a specific radio technology.

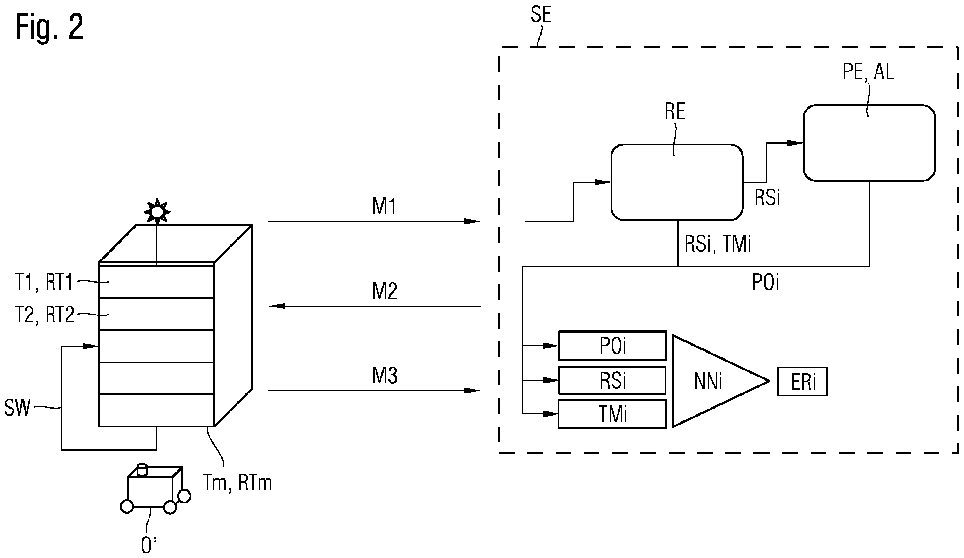

Fig. 2 is a schematic diagram illustrating the runtime phase in which the trained neural networks NNi as described with respect to Fig. 1 are used during the localization of an object. In Fig. 2, the object O' to be localized carries the same tags T1, T2, ..., Tm as the object O in the training phase of Fig. 1.

The object O' uses one of the radio technologies RT1 to RTm for localization. This radio technology is also designated as the current radio technology RTi in the following. The tag of this current radio technology is switched on whereas the tags of the other radio technologies are switched off so that the energy consumption is reduced. In the course of the localization, a message M1 is transmitted from the object O' to the server SE which is the server of Fig. 1 having the trained neural networks stored therein. The message M1 includes the raw signal RSi of the current radio technology RTi measured by the respective tag together with an identity specifying the current radio technology RTi and the measurement time TMi. The message M1 is received by the receiver RE of the server SE which hands over the raw signal RSi to the position engine PE which determines the position POi of the object O' based on the current radio technology by the positioning algorithm AL.

The determined position POi is fed as an input to the corresponding trained neural network NNi of the current radio technology RTi. Furthermore, the receiver RE feeds the raw signal RSi as well as the measurement time TMi to the trained neural network NNi of the current radio technology. The trained neural network NNi outputs the positional error ERi. For each radio technology, a maximum acceptable error is stored within the server SE. The server compares the positional error ERi with the maximum acceptable error of the current radio technology RTi. In case that the error ERi exceeds the maximum acceptable error, a message M2 is transmitted from the server SE to the object O'. This message includes the request to switch the radio technology from the current technology RTi to another radio technology, i.e. to switch off the tag of the current radio technology and to switch on the tag of the other radio technology.

The switch to the other radio technology is then performed on the object O' as indicated by the arrow SW in Fig. 2. Thereafter, a message M3 is transmitted from the object O' to the server SE. This message has the same structure as the message M1 but now refers to the new radio technology to which the object O' has been switched. I.e., the message M3 includes an identity of the new radio technology, the raw signal of the new radio technology as well as the corresponding measurement time.

Thereafter, the same steps as with respect to the radio technology RTi are performed. I.e., it is determined whether the positional error output by the neural network of the new radio technology exceeds the corresponding maximum acceptable error. If this is not the case, the new radio technology will be used for localizing the object O' as long as the positional error is lower than the maximum acceptable error. Otherwise, a switch to another radio technology is performed and it is once again checked whether the positional error is lower than the maximum acceptable error. In case that no radio technology with an error below the maximum acceptable error can be found, an additional criterion for determining the radio technology used for localization is used. E.g., the initial radio technology RTi is kept or the radio technology with the lowest positional error is used for the localizing the object O'.

The invention as described in the foregoing has several advantages. Particularly, an accurate prediction of the positional error of different radio technologies is achieved by the training of neural networks. To do so, the raw signal of the corresponding radio technology as well as the position determined by the corresponding radio technology and the measurement time are used as input to the respective neural network which outputs the error for the corresponding radio technology.

In a modified variant of the invention, the measurement time may also be omitted as input of the neural network. However, the measurement time considers the fact that temporary and regular patterns in signal disturbances may occur which have an influence on the positional error of the radio technology. E.g., a signal reflection happens at a predetermined time at a specific day of the week as a delivery truck obstructs the line of sight of the radio network of the corresponding radio technology. Furthermore, in another variant of the invention, the input of the neural network may only include the raw signal or the determined position, optionally in combination with the measurement time.

The positional error determined by the method of the invention enables an efficient switching between different radio technologies in case that the error of one radio technology exceeds a threshold. This improves the localization of the object by using a radio technology with a low positional error.

## Claims

1. A computer-implemented method for generating a predictor (PR) for localization errors (ERi) of different radio technologies (RT1, RT2, ..., RTm), comprising the following steps for a respective radio technology (RT1, RT2, ..., RTm) of said different radio technologies (RT1, RT2, ..., RTm):
i) providing a plurality of positional measurements (PMi) acquired in a predetermined environment, where each positional measurement (PMi) comprises a raw signal (RSi) measured based on the respective radio technology (RT1, RT2, ..., RTm), a first position (POi) determined based on the raw signal (RSi) and a second position (PO') being a ground truth position for the respective positional measurement (PMi);
ii) training (TR) a data-driven model (NN1, ..., NNm) for the respective radio technology (RT1, RT2, ..., RTm), the data-driven model (NN1, ..., NNm) having an input (IN) for the raw signal (RSi) and/or the first position (POi) and an output (OU) for a positional error (ERi) derived from the input (IN), where the positional error (ERi) is the difference between the first position (POi) and the second position (PO'), the training (TR) being based on training data (TD) comprising for each positional measurement (PMi) the raw signal (RSi) and/or the first position (POi) and the positional error (ERi).

2. The method according to claim 1, wherein the predetermined environment is an indoor environment and/or an industrial plant.

3. The method according to claim 1 or 2, wherein the positional measurements (PMi) provided in step i) are acquired or have been acquired by moving an object (O) having a tag (T1, T2, ..., Tm) for measuring the raw signal (RSi) of each radio technology (RT1, RT2, ..., RTm) to a plurality of different locations within the predetermined environment, where for each location the raw signal (RSi) is measured by each tag (T1, T2, ..., Tm) and the first position (POi) for each radio technology (RT1, RT2, ..., RTm) is determined based on the raw signal (RSi) measured by each tag (T1, T2, ..., Tm), the second position (PO') being known or being determined for the respective location.

4. The method according to claim 3, wherein the object (O) is an automated guided vehicle.

5. The method according to claim 3 or 4, wherein the second position (PO') is determined by a LIDAR system (LI) carried by the object (O) or an optical system carried by the object (O).

6. The method according to one of the preceding claims, wherein said different radio technologies (RT1, RT2, ..., RTm) comprise one of more of the following radio technologies:
- one or more short-range radio technologies, particularly UWB and/or WiFi and/or RFID;
- one or more cellular radio technologies, particularly 5G and/or 6G.

7. The method according to one of the preceding claims, wherein an error map (EMi) is determined for each radio technology (RT1, RT2, ..., RTm), where a respective error map (EMi) indicates for each second position (PO') the positional error for the respective radio technology (RT1, RT2, ..., RTm).

8. The method according to one of the preceding claims, wherein the data-driven model (NN1, ..., NNm) for a respective radio technology (RT1, RT2, ..., RTm) comprises one or more neural networks, particularly one or more convolutional neural networks.

9. The method according to one of the preceding claims, wherein the raw signals (RSi) of one or more radio technologies (RT1, RT2, ..., RTm) of the plurality of radio technologies (RT1, RT2, ..., RTm) represent channel impulse response information or received signal strength information or time-of-flight information.

10. The method according to one of the preceding claims, wherein each positional measurement (PMi) for one or more radio technologies (RT1, RT2, ..., RTm) of the plurality of radio technologies (RT1, RT2, ..., RTm) further comprises the measurement time (TMi) of the raw signal (RSi) of the respective radio technology (RT1, RT2, ..., RTm), where the measurement time (TMi) is preferably part of the input (IN) of the data-driven model (NN1, ..., NNm) and part of the training data (TD) .

11. A computer-implemented method for localization of an object (O') in a preset environment, where the method has access to the predictor (PR) which is generated or has been generated by a method according to one of the preceding claims based on a plurality of positional measurements (PMi) acquired in the predetermined environment covering the preset environment, wherein the object (O') has a tag for measuring the raw signal (RSi) of each radio technology (RT1, RT2, ..., RTm) of the plurality of radio technologies (RT1, RT2, ..., RTm) and the method for localization of the object (O') is capable to localize the object (O') by determining its position based on the measured raw signal (RSi) of the respective radio technology (RT1, RT2, ..., RTm), wherein:
a current radio technology (RT1, RT2, ..., RTm) of the plurality of radio technologies (RT1, RT2, ..., RTm) which is used for localizing the object (O') is changed to another radio technology (RT1, RT2, ..., RTm) of the plurality of radio technologies (RT1, RT2, ..., RTm) in case that one or more conditions are present, the one or more conditions comprising the condition that the positional error (ERi) of the current radio technology (RT1, RT2, ..., RTm) exceeds a threshold associated with the current radio technology (RT1, RT2, ..., RTm).

12. The method according to claim 11, wherein the one or more conditions comprise the condition that the positional error (ERi) of the other radio technology (RT1, RT2, ..., RTm) does not exceed a threshold associated with the other radio technology (RT1, RT2, ..., RTm).

13. An apparatus for data processing, wherein the apparatus is configured to carry out a method according to one of the preceding claims.

14. A computer program product with program code, which is stored on a machine-readable carrier, for carrying out a method according to one of claims 1 to 12 when the program code is executed on a computer.

15. A computer program with program code for carrying out a method according to one of claims 1 to 12 when the program code is executed on a computer.
